**Europäisches Patentamt**

**European Patent Office**

**Office européen des brevets**

(11) Veröffentlichungsnummer : **0 368 366 B1**

# EUROPÄISCHE PATENTSCHRIFT

(45) Veröffentlichungstag der Patentschrift :
**03.06.92 Patentblatt 92/23**

(51) Int. Cl.$^5$ : **G05B 21/02**

(21) Anmeldenummer : **89123396.7**

(22) Anmeldetag : **04.05.88**

(54) **Verfahren zum Erfassen eines zwischen einem stationären Anfangszustand und einem stationären Endzustand zeitlichveränderlichen Signals.**

(30) Priorität : **25.05.87 DE 3717555**

(43) Veröffentlichungstag der Anmeldung :
**16.05.90 Patentblatt 90/20**

(45) Bekanntmachung des Hinweises auf die
Patenterteilung :
**03.06.92 Patentblatt 92/23**

(84) Benannte Vertragsstaaten :
**AT BE CH DE FR GB IT LI SE**

(56) Entgegenhaltungen :
FR-A- 2 515 725
GB-A- 2 014 812
US-A- 4 161 782
US-A- 4 715 002

(56) Entgegenhaltungen :
**GIT FACHZEITSCHRIFT FUR DAS LABORATO-
RIUM. vol. 15, no. 6, Juni 1971, DARMSTADT
DE Seiten 628 - 630; E.
BLATT:"Datenverarbeitung im klinisch-chemischen Labor"
INTERNATIONAL CONFERENCE ON DIGITAL
SIGNAL PROCESSING September 1978, FLO-
RENCE IT Seiten 489 - 495; T. FJÄLLBRANT:
"DataReduction of Sampled Speech Signals,-
Method and Results"
PROCEEDINGS OF THE 1965 NATIONAL TE-
LEMETERING CONFERENCE April 1965, New
York Seiten 25 - 28; H.N. MASSEY: "An ExperimentalTelemetry Data Compressor"**

(60) Veröffentlichungsnummer der früheren
Anmeldung nach Art. 76 EPü : **0 292 749**

(73) Patentinhaber : **SIEMENS
AKTIENGESELLSCHAFT
Wittelsbacherplatz 2
W-8000 München 2 (DE)**

(72) Erfinder : **Preuss, Hans-Peter, Dr.-Ing.
Wattkopfstrasse 68
W-7500 Karlsruhe 21 (DE)**

EP 0 368 366 B1

## Beschreibung

Verfahren zum Erfassen eines zwischen einem stationären Anfangszustand und einem stationären Endzustand zeitlich veränderlichen Signals

Die Erfindung betrifft ein Verfahren zum Erfassen eines zeitlich veränderlichen Signals gemäß dem Oberbegriff des Anspruchs 1.

In der Zeitschrift "Siemens Energie & Automation" 8. Jahrgang (1986), Heft 5, Seiten 339 bis 341 ist ein Verfahren zur Prozeßidentifikation beschrieben, bei dem auf den Eingang einer Regelstrecke ein Sprungsignal bekannter Höhe gegeben wird, auf welches diese ein Ausgangssignal, die sogenannte Sprungantwort, abgibt, das in etwa einen S-förmigen zeitlichen Verlauf hat. Dieses Signal wird zyklisch erfaßt. Das bekannte Verfahren erfordert einen Speicher, in dem Meßwerte eines Zeitraumes gespeichert werden können, der lediglich die Periodendauer von Störsignalen überdeckt, also nur einen kleinen Teil der gesamten Einschwingdauer. Bei anderen Verfahren zur Identifikation von Regelstrecken muß der Signalverlauf über die gesamte Einschwingzeit erfaßt werden, wobei zu Beginn des Erfassungsvorganges die Einschwingzeit auch nicht näherungsweise bekannt ist.

Es sind mehrere Verfahren zur Datenreduktion bekannt. Bei dem in der französischen Patentanmeldung FR-A-2 515 725 beschriebenen werden die in Digitalwerte umgesetzten Meßwerte zunächst in einen Pufferspeicher eingetragen, der vom sogenannten FIFO-Typ ist. Der Umfang der dort gespeicherten Daten wird dadurch reduziert, daß jeder zweite Wert darauf geprüft wird, ob er um weniger als einen bestimmten Betrag vom Mittelwerte der beiden benachbarten Werte abweicht. Ist dies der Fall, wird der Wert gestrichen. Dieses Verfahren kann wiederholt auf die jeweils reduzierten Daten angewandt werden. Wird ein Wert gestrichen, rücken die anderen Werte im Pufferspeicher nach. In den dadurch freiwerdenden Platz wird ein neuer Abtastwert eingetragen. Den gespeicherten Werten werden Kennziffern zugeordnet, welche die Anzahl der gestrichenen Werte angeben. Ist eine Datenreduktion nicht mehr möglich, wird der im letzten Speicherplatz des Pufferspeichers enthaltene Wert ausgelesen und in einen weiteren Speicher übertragen. Die Datenreduktion erfolgt allein aufgrund des Kriteriums, ob ein Wert um weniger als einen vorgegebenen Betrag vom Mittelwert der beiden benachbarten Werte abweicht. Der Speicher, in den die reduzierten Daten eingetragen werden, kann daher keine vorgegebene Größe haben. Vielmehr muß ein großer Speicherbereich bereitgestellt werden, damit alle reduzierten Daten abgespeichert werden können.

Der vorliegenden Erfindung liegt die Aufgabe zugrunde, ein Verfahren der im Oberbegriff des Anspruchs 1 genannten Art anzugeben, mit dem Signalverläufe, insbesondere Einschwingvorgänge von Regelstrecken, bei begrenztem Speicherbereich vollständig mit ausreichender Genauigkeit erfaßt werden.

Erfindungsgemäß wird diese Aufgabe mit den im kennzeichnenden Teil des Anspruchs 1 angeaebenen Maßnahmen gelöst.

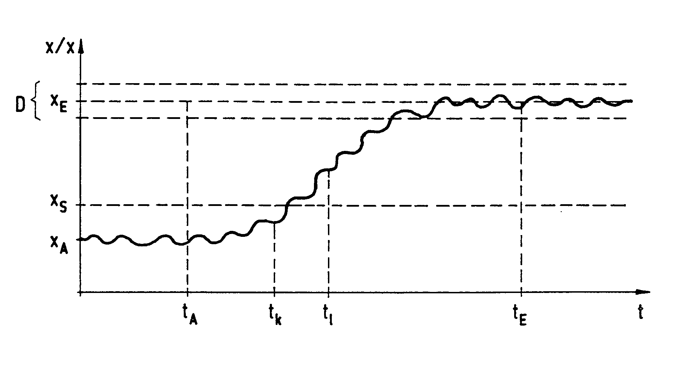

Anhand der Zeichnung werden im folgenden das neue Verfahren sowie dessen Weiterbildunaen und Vorteile näher beschrieben und erläutert.

In der Figur ist das Zeitdiagramm der Sprungantwort einer Regelstrecke veranschaulicht, d. h. das Ausgangssignal der Regelstrecke, das entsteht, wenn auf ihren Eingang ein Sprungsignal gegeben wird. Von einem Anfangswert $X_A$ steigt im allgemeinen nach einer Verzugszeit das Ausgangssignal x an und erreicht zu einem Zeitpunkt $t_E$ einen Endwert $X_E$ Wegen unvermeidlicher Störungen in der Regelstrecke hat das Signal x nicht einen glatten, sondern einen welligen Verlauf, woraus Fehler bei der Ermittlung der Werte $x_A$ und $x_E$ entstehen können. Es ist daher zweckmäßig, als Anfangswert $x_A$ nicht nur den Zeitwert zu einem Zeitpunkt $t_A$ zunehmen, sondern ihn durch Mittelung mehrerer vor dem Zeitpunkt $t_A$ abgetasteter Werte zu bilden.

Die Bestimmung des Endwertes $x_E$ ist strenggenommen ein unlösbares Problem, wenn keine Annahme über die Einschwingzeit gemacht wird, da der Endwert nur asymptotisch erreicht wird und die durch die Storungen bedingte Welligkeit des Signals das Erreichen eines Endwertes vortäuschen kann. Z. B. ist zu den Zeit-punkten $t_k$ und $t_l$ nicht ohne weiteres erkennbar, ob es sich um den Endwert eines schnellen Prozesses mit kleiner Verstärkung handelt oder ob nur ein temporäres Plateau vorliegt. Zur Lösung dieses Problems wird als Endwertbedingung überprüft, ob mindestens eine bestimmte Anzahl der abgetasteten Werte in einem schmalen Streifen um den letzten Wert liegt. Hierzu können die Werte $X_i$ der Sprungantwort, die um weniger als einen vorgegebenen Betrag vom letzten Wert abweichen, nach der Formel

$$|x_i - x_k| \leqq p \, |x_i - x_l|$$

mit K = l ... i und $p \leqq 0,1$ ermittelt werden. Beispielsweise kann die Mindestanzahl die Hälfte oder ein Drittel der Werte sein; es kann aber auch eine absolute Zahl von z. B. 100 Werten angenommen werden. In der Figur ist dieser schmale Streifen mit D bezeichnet. Er kann z. B. 2 bis 3 % des letzten Wertes betragen. Diese Bedingung wird zum Zeitpunkt $t_E$ erreicht; der Einschwingvorgang gilt zu diesem Zeitpunkt als abgeschlossen. Auch bei der Ermittlung des Endwertes $x_E$ kann es zweckmäßig sein, nicht den Wert zum Zeitpunkt $t_E$ zu nehmen, sondern einen Mittelwert von auf diesen Zeitpunkt folgenden oder auch von vorangegangenen Meßwerten zu verwenden.

Die beschriebene Endwertbedingung reicht unter Umständen nicht aus, den Endwert $x_E$ und den Zeitpunkt $t_E$ zuverlässig zu bestimmen; denn in dem auf den Zeitpunkt $t_A$ folgenden horizontal verlaufenden Teil der Kurve und auch noch zu Beginn des Anstiegs der Kurve, wie im Zeitpunkt $t_K$, kann die Anzahl der Meßwerte, die nur wenig voneinander abweichen, verhältnismäßig groß im Vergleich zur Gesamtzahl der abgetasteten Werte sein, so daß die beschriebene Endwertbedingung erfüllt ist. Vorteilhaft ist daher eine Ansprechschwelle $x_S$ vorgesehen. Erst wenn diese Schwelle überschritten ist, werden die Werte auf das Endwertkriterium überprüft. Das Einführen der Ansprechschwelle ist auch deshalb zweckmäßig, weil erst darüber das Nutz-Störsignal-Verhältnis so groß ist, daß die Sprungantwort vernünftig ausgewertet werden kann.

Da für die Abspeicherung nur ein begrenzter Speicherbereich zur Verfügung steht und die Einschwingzeit, die zwischen einigen Millisekunden und mehreren Stunden betragen kann, zu Beginn der Abtastung auch nicht näherungsweise bekannt ist, kann zunächst die Abtastrate nicht passend gewählt werden. Zur Lösung dieses Problems, das auch bei anderen Signalen als der Sprungantwort einer Regelstrecke auftreten kann, wird nach dem Start die Sprungantwort zunächst mit der höchstmöglichen Abtastrate erfaßt, und die Abtastwerte werden, gegebenenfalls einschließlich der zugehörigen Zeitwerte, abgespeichert. Sobald der verfügbare Speicherbereich gefüllt ist, ohne daß das Endekriterium erreicht ist, wird eine Datenkomprimierung der gespeicherten Werte vorgenommen. Diese kann z. B. darin bestehen, daß jeder zweite Wert verworfen wird. Damit wird die Hälfte der Speicherplätze zur Aufnahme weiterer Meßwerte frei. Die Abtastung wird dann entweder unverändert in der schnellstmöglichen Weise fortgesetzt, wobei aber nur noch jeder zweite Wert abgespeichert wird, oder die Abtastrate wird halbiert. Hat die Gesamtzahl der Speicherwerte erneut die maximal zulässige Grenze ohne Ansprechen eines Endwertkriteriums erreicht, werden die gespeicherten Werte abermals komprimiert. In den freigewordenen Speicherbereich wird dann, falls die Abtastrate unverändert bleibt, nur noch jeder vierte Wert eingetragen oder die Abtastrate wird nochmals halbiert und alle Abtastwerte werden gespeichert. Dieses Verfahren wird bis zum Erreichen eines Endekriteriums fortgesetzt. Als Ergebnis hat man dann eine vorgegebene Anzahl zeitlich geordneter Abtastwerte der gesamten Sprungantwort, deren Dauer zunächst völlig unbekannt war.

In dem erwähnten einfachen Beispiel wurde zur Datenreduzierung jeder zweite Meßwert nach jedem Vollschreiben des Speicherbereiches ersatzlos gestrichen. Selbstverständlich sind auch andere Datenkomprimierverfahren, wie Mittelung von jeweils zwei aufeinanderfolgenden Meßwerten, möglich. Je kleiner die Maximalzahl der gespeicherten Meßwerte ist, desto sinnvoller sind solche, welche die Informationen aller Meßwerte einbeziehen.

Vorteilhaft ist die maximale Anzahl der gespeicherten Meßwerte bzw. der Zellen des vorgegebenen Speicherbereichs ungerade. Der erste Meßwert ist der Anfangswert $x_A$, der nicht gelöscht oder verändert wird. Die Anzahl der übrigen Werte ist geradzahlig, so daß zur Datenkomprimierung je ein Wertepaar zu einem neuen Wert zusammengefaßt werden kann.

## Patentansprüche

1. Verfahren zum Erfassen eines zeitlich veränderlichen Signals, das zwischen einem Startzeitpunkt $t_A$ und einem Endezeitpunkt $t_E$ abgetastet und in Meßwerte umgewandelt wird, die mit einem Verfahren zur Datenreduktion bearbeitet und nach ein ander in einen Speicherbereich eingetragen werden, **dadurch gekennzeichnet** , daß jedesmal dann, wenn der Speicherbereich, der eine vorgegebene Größe hat, gefüllt ist, eine Datenreduktion der gespeicherten und der folgenden neuen Werte vorgenommen wird, bis ein Endekriterium erfüllt ist, so daß alle zwischen dem Startzeitpunkt $t_A$ und dem Endezeitpunkt $t_E$ abgetasteten, gegebenenfalls datenreduzierten Werte in dem Speicherbereich vorgegebener Größe enthalten sind.

2. Verfahren nach Anspruch 1, **dadurch gekennzeichnet,**
– daß zur Datenreduktion jeder zweite gespeicherte Meßwert gelöscht wird und die Abtastrate halbiert oder bei unveränderter Abtastrate nur jeder zweite Meßwert abgespeichert wird.

3. Verfahren nach Anspruch 1, **dadurch gekennzeichnet,**
– daß zur Datenreduktion der Mittelwert von je zwei aufeinanderfolgenden Meßwerten gebildet wird.

4. Verfahren nach einem der Ansprüche 1 bis 3, **dadurch gekennzeichnet,**
– daß der Speicherbereich eine ungerade Anzahl von Zellen enthält und zur jeweiligen Datenreduzktion jeweils zwei Meßwerte zu einem Wert zusammengefaßt werden, wobei der Anfangswert $x_A$, $t_A$ unverändert bleibt.

5. Verfahren nach einem der Ansprüche 1 Dis 4, **dadurch gekennzeichnet,**
– daß der Endwert $x_E$ als erreicht gilt, wenn der Anteil der Werte, die um weniger als einen vorgegebenen Betrag vom letzten Wert abweichen, an der Gesamtzahl der Werte $x_i$ einen vorgegebenen Betrag über-

steigt.

6. Verfahren nach Anspruch 5, **dadurch gekennzeichnet,**
– daß die Werte $x_i$ der Sprungantwort, die um weniger als einen vorgegebenen Betrag vom letzten Wert abweichen, nach der Formel

$$|x_i - x_k| \leqq p \, |x_i - x_l|$$

mit k = 1 ... i und p $\leqq$ 0,1 ermittelt werden.

7. Verfahren nach Anspruch 5 oder 6, **dadurch gekennzeichnet,**
– daß der Endwert dann als erreicht gilt, wenn mindestens die Hälfte der Werte um weniger als den vorgegebenen Betrag vom letzten Wert abweichen.

8. Verfahren nach einem der Ansprüche 5 bis 7, **dadurch gekennzeichnet,**
– daß der Endwert erst dann als erreicht gilt, wenn die Werte einen Schwellwert $x_S$ überschreiten.

## Claims

1. A method for detecting a signal which is variable with time and which is scanned between a starting instant $t_A$ and a final instant $t_E$ and converted into test data, which are processed by a method for data reduction and are successively entered into a memory area, characterized in that each time the memory area, which has a specified size, is filled, data reduction of the stored and of the subsequent new values is undertaken until a final criterion is fulfilled, so that all values which are scanned between the starting instant $t_A$ and the final instant $t_E$, which are possibly values which have undergone data reduction, are contained in the memory area of a specified size.

2. A method according to claim 1, characterized in that
– for data reduction every second stored test datum is erased and the scanning rate is halved or with the scanning rate unaltered only every second test datum is stored.

3. A method according to claim 1, characterized in that
– for data reduction the mean value of in each case two successive test data is taken.

4. A method according to one of claims 1 to 3, characterized in that
– the memory area contains an odd number of cells and for the respective data reduction in each case two test data are combined into one value, with the initial value $x_A$, $t_A$ remaining unaltered.

5. A method according to one of claims 1 to 4, characterized in that
– the final value $x_E$ is taken to have been reached if the number of values which differ from the preceding value by less than a specified amount exceeds a specified amount of the total number of the values $x_i$.

6. A method according to claim 5, characterized in that
– the values $x_l$ of the step response which differ from the preceding value by less than a specified amount are determined according to the formula

$$|x_i - x_k| \leqq p \, |x_i - x_l|$$

where k = l ... i and p $\leqq$ 0.1.

7. A method according to claim 5 or 6, characterized in that
– the final value is taken to have been reached if at least half the values differ from the preceding value by less than the specified amount.

8. A method according to one of claims 5 to 7, characterized in that
– the final value is only taken to have been reached if the values exceed a threshold value $x_S$.

## Revendications

1. Procédé pour détecter un signal variable dans le temps, qui est échantillonné entre un instant de démarrage $t_A$ et un instant de fin $t_E$ et est converti en des valeurs de mesure qui sont traitées selon un procédé de réduction des données et qui sont introduites successivement dans une zone de mémoire, caractérisé par le fait que chaque fois que la zone de mémoire, qui possède une taille prédéterminée, est remplie, une réduction des données des valeurs mémorisées et des nouvelles valeurs suivantes est exécutée jusqu'à ce qu'un critère final soit satisfait, de sorte que toutes les valeurs, qui sont échantillonnées entre l'instant de démarrage $t_A$ et l'instant final $t_E$ et ont éventuellement subi une réduction des données, sont contenues dans la zone de mémoire possédant la taille prédéterminée.

2. Procédé suivant la revendication 1, caractérisé par le fait

**4**

– que pour la réduction des données, on supprime chaque seconde valeur de mesure mémorisée, qu'on divise par deux la cadence d'échantillonnage ou qu'on mémorise seulement chaque seconde valeur de mesure en conservant la même cadence d'échantillonnage.

3. Procédé suivant la revendication 1, caractérisé par le fait

– que pour la réduction des données, on forme la valeur moyenne de respectivement deux valeurs de mesure successives.

4. Procédé suivant l'une des revendications 1 à 3, caractérisé par le fait

– que la zone de mémoire contient un nombre impair de cellules et que, pour la réduction respective des données, respectivement deux valeurs de mesure sont réunies en une valeur, la valeur initiale $x_A$, $t_A$ restant inchangée.

5. Procédé suivant l'une des revendications 1 à 4, caractérisé par le fait

– que la valeur finale $x_E$ est considérée comme atteinte lorsque le pourcentage des valeurs, qui s'écartent de moins d'une valeur prédéterminée par rapport à la valeur finale, dans le nombre total des valeurs $x_i$, dépasse une valeur prédéterminée.

6. Procédé suivant la revendication 5, caractérisé par le fait

– que les valeurs $x_i$ de la réponse en forme de saut, qui s'écartent de moins d'une valeur prédéterminée par rapport à la valeur finale, sont déterminées conformément à la formule

$$|x_i - x_k| \leqq p\,|x_i - x_l|$$

avec k = l ... i et p $\leqq$ 0,1.

7. Procédé suivant la revendication 5 ou 6, caractérisé par le fait

– que la valeur finale est considérée comme atteinte lorsqu'au moins la moitié des valeurs s'écarte, de moins de la valeur prédéterminée, de la valeur finale.

8. Procédé suivant l'une des revendications 5 à 7, caractérisé par le fait

– que la valeur finale est considérée comme valable uniquement lorsque les valeurs dépassent une valeur de seuil $x_S$.